# EUROPEAN PATENT APPLICATION

(11) **EP 2 775 444 A1**
(43) Date of publication of application: **10.09.2014**
(21) Application number: 14157696.7
(22) Date of filing: 04.03.2014
(51) Int. Cl.: G06Q 30/04, G06Q 30/06

(54) **Information processing system, information processing apparatus, method of controlling an information processing apparatus, and program**

(30) Priority: 07.03.2013 JP 2013045784; 14.01.2014 JP 2014003948; 06.02.2014 JP 2014021248
(71) Applicant: Ricoh Company Ltd., Tokyo 143-8555 (JP)
(72) Inventor: Sekine, Ryuji, Tokyo 143-8555 (JP)
(74) Representative: Leeming, John Gerard

(57) **Abstract**

An information processing system that performs data processing based on trade information includes a trade information acquiring device which acquires the trade information; a rule information storing device which stores first rule information applied to trade amounts contained in the trade information and second rule information applied to invoice data that are produced based on the first rule information; and a workflow controller which controls the invoice data that are produced based on the first rule information so that the invoice data are stored based on the second information.

## Description

The present invention relates to an information processing system, an information processing apparatus, a method of controlling an information processing apparatus, and a program.

Along with wide use of the Internet, suppliers of commodities or services ordinarily issue an invoice of an electronic form (hereinafter, an e-invoice) to customers of the suppliers. Meanwhile, the suppliers of the commodities or the services may issue an invoice of a paper medium upon request of the customer.

There is an invoice issuance service for thoroughly undertaking issuance of invoices of the electronic form and invoices of the paper medium for the suppliers of the commodities or the services. The invoice issuance service receives trade information to be written in an invoice from a supplier of the commodities or the services and information about customers, and issues the invoice in a format determined for each customer.

In the invoice issuance service, there is further provided a service of storing the invoices in the electronic form or the invoices of the paper medium for a predetermined period in conformity with a demand by laws.

Japanese Laid-open Patent Publication No. 2003-030431 discloses an alternate server for converting trade information received from the customer to a form receivable by a banking system. Japanese Laid-open Patent Publication No. 2001-326762 and Japanese Laid-open Patent Publication No. 2007-072965 disclose an apparatus for maintaining data interchangeability.

However, in an example of the invoice issuance service, an invoice is not produced or processed in compliance with a policy applied depending on a trade with the customer. For example, a value added tax (VAT) is widely imposed in Europe, and tax rates may vary depending on a legal system of a nation where the trade is carried out. Further, a storing rule of produced invoices may differ for each nation. Therefore, it is difficult to process invoices in response to the above storing rule.

Accordingly, embodiments of the present invention provide a novel and useful information processing system, an information processing apparatus, a method of controlling an information processing apparatus, and a program solving one or more of the problems discussed above.

One aspect of the embodiments of the present invention may be to provide an information processing system that performs data processing based on trade information including a trade information acquiring device which acquires the trade information; a rule information storing device which stores first rule information applied to trade amounts contained in the trade information and second rule information applied to invoice data that are produced based on the first rule information; and a workflow controller which controls the invoice data that are produced based on the first rule information so that the invoice data are stored based on the second information.

Additional objects and advantages of the embodiments will be set forth in part in the description which follows, and in part will be clear from the description, or may be learned by practice of the invention. Objects and advantages of the invention will be realized and attained by means of the elements and combinations particularly pointed out in the appended claims.

It is to be understood that both the foregoing general description and the following detailed description are exemplary and explanatory only and are not restrictive of the invention as claimed.

### BRIEF DESCRIPTION OF THE DRAWINGS

FIG. 1 schematically illustrates an invoice data processing system of an embodiment of the present invention;
FIG. 2 illustrates an exemplary hardware configuration of an entire system of the invoice data processing system of the embodiment of the present invention;
FIG. 3 is a functional block diagram of an invoice data processing apparatus of the embodiment of the present invention;
FIG. 4 illustrates an exemplary table storing customer information;
FIG. 5 illustrates an exemplary table storing trade information;
FIG. 6 illustrates an exemplary table storing tax rate information contained in policy information;
FIG. 7 illustrates an exemplary table which stores storing rule information contained in the policy information;
FIG. 8 illustrates an exemplary invoice output by the invoice data processing apparatus of the embodiment;
FIG. 9 is a flow chart schematically illustrating a process performed by the invoice data processing apparatus of the embodiment;
FIG. 10 a flow chart schematically illustrating a process of producing an invoice performed by the invoice data processing apparatus of the embodiment;
FIG. 11 a flow chart schematically illustrating a process of storing invoice data performed by the invoice data processing apparatus of the embodiment;
FIG. 12 is a sequence diagram of the invoice data processing system of the embodiment of the present invention;
FIG. 13 illustrates an exemplary hardware configuration of the invoice data processing apparatus of the embodiment;
FIG. 14 illustrates an exemplary table which associates a customer name with a type of invoice or the like; and
FIG. 15 illustrates an exemplary table which associates the customer name and the type of invoice with configuration information.

### DETAILED DESCRIPTION OF THE PREFERRED EMBODIMENTS

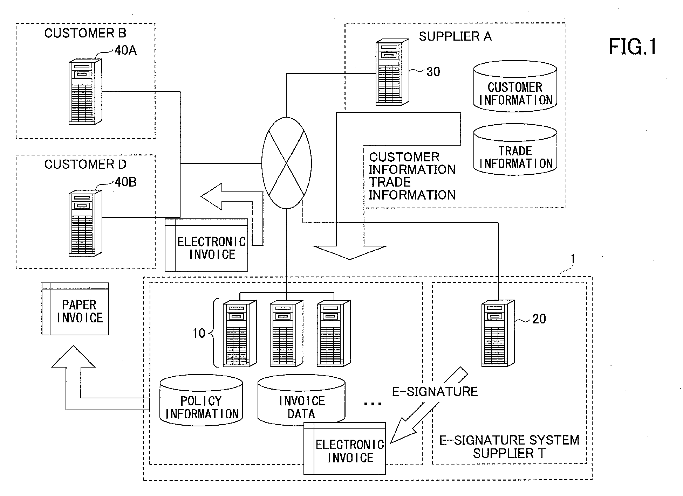

A description is given below, with reference to the FIG. 1 through FIG. 15 of embodiments of the present invention. Where the same reference symbols are attached to the same parts, repeated description of the parts is omitted.

Reference symbols typically designate as follows:
1: invoice data processing system;
10: invoice data processing apparatus;
20: e-signature system;
30: backbone system;
101: workflow controller;
102: OCR processor;
103: policy information storing part;
104: invoice data producing device;
105: invoice data storing part;
106: visual data processor;
111: acquiring part;
112: calculator;
113: shaping part;
114: outputting part;
151 : policy information;
152: invoice data;
161: tax rate information;
162: storing rule information;
201: e-signature generator;
301: customer information; and
302: trade information.

### [1. SUMMARY]

FIG. 1 schematically illustrates an invoice data processing system 1 of an embodiment of the present invention. The invoice data processing system 1 includes an invoice data processing apparatus 10, an e-signature system 20 of an e-signature service supplier T that provides services of adding an e-signature to electronic data, and a backbone system 30 for a supplier A for supplying commodities or services. Further, referring to FIG. 1, an information processing apparatus 40A of a customer B for the supplier A and an information processing apparatus 40B of a customer D for the supplier A are illustrated. The invoice data processing apparatus 10, the e-signature system 20, the backbone system 30, and the information processing apparatuses 40A and 40B are mutually connected by a network such as the Internet.

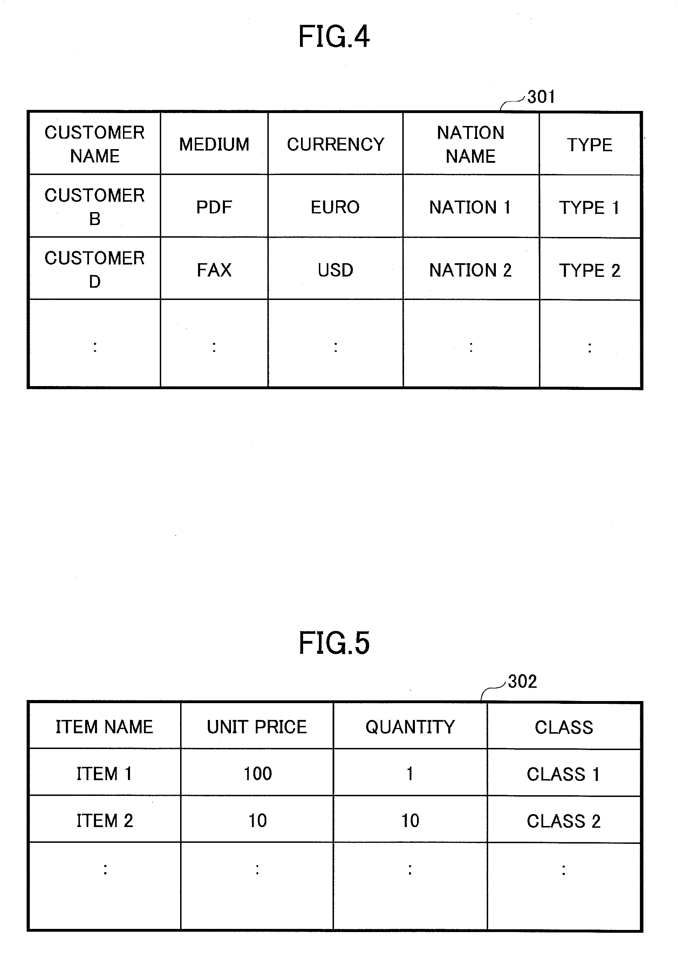

The backbone system 30 of the supplier A is formed by a system represented by an Enterprise Resource Planning (ERP) and manages trade information related to the commodities or the services provided by the supplier A to the customers. As illustrated in, for example, FIG. 5, the trade information includes information (described in detail later) such as an item name, a unit price, a quantity, and a class of the item of the commodities or the services. Further, the backbone system 30 manages customer information about the customers. As illustrated in, for example, FIG. 4, the customer information includes information (described in detail later) a medium into which invoice data are output, a currency used for a trade, a nation where the customer belongs, and a type of invoice data to be output. The backbone system 30 is ordinarily formed by one or more computers for a server use.

The invoice data processing apparatus 10 reads the customer information and the trade information, which are stored in the backbone system 30, calculates an amount billed (the sum of the trade amounts) in conformity with predetermined policy information, and produces invoice data for the customer of the supplier A. This predetermined policy information is previously stored in the invoice data processing apparatus 10 and determines a tax rate set for each class of trade items. The invoice data to be produced are output using a medium (paper or an electronic type such as FAX or PDF), which is different for each customer.

Further, the invoice data processing apparatus 10 stores the produced invoice data in conformity with the predetermined policy information. This policy information is previously stored in the invoice data processing apparatus 10 together with the above tax rate. This policy information is set for each of legal systems, which are different for each nation. The policy information includes, for example, necessity of adding an e-signature to the invoice data, a storing time limit of the invoice data, a storing location, a storing format, or the like.

For example, if the legal system of a nation related to a trade requires storage of invoice data having an e-signature, the invoice data processing apparatus 10 adds the e-signature to the invoice data using the e-signature system 20 and stores the invoice data which are added with the e-signature. Further, in a case where the legal system requires storage of the invoice data inside the nation for, for example, 5 years, the invoice data processing apparatus 10 stores the invoice data in a memory device installed inside the nation.

Further, the invoice data processing apparatus 10 can take trade information between the supplier A and the customer of the supplier A before the trade information is stored in the backbone system 30. For example, the trade information is provided by a paper medium, the paper medium is scanned and the contents of the scanned paper medium are taken in the invoice data processing apparatus 10 as electronic data. Further, when the trade information in the electronic type is provided, the contents of the trade information are read. Then, the invoice data processing apparatus 10 stores the read contents into the backbone system 30 of the supplier A as the trade information.

The invoice data processing apparatus 10 is formed by one or more computers and may include a plurality of memory devices which are located at physically different positions in order to deal with a requirement for the above described storing location of the invoice data. Said differently, the invoice data processing apparatus 10 includes not only an apparatus formed by a single computer but also an apparatus group formed by a plurality of computers.

The e-signature system 20 provides a service of an active server pages (ASP) type, where an e-signature, which is generated using a certification, is added to data received from the outside. As described, the e-signature system 20 adds the e-signature to the invoice data in response to a request from the invoice data processing apparatus 10. The e-signature system 20 may be provided by being assembled into a part of the invoice data processing apparatus 10.

According to the invoice data processing system 1 of the embodiment, the trade between the supplier of the commodities or the services and the customer is computerized and stored in the backbone system of the supplier. Further, it is possible to produce the invoice data for the customer of the supplier of the commodities or the services in conformity with policy information applied to each customer and each trade. Furthermore, the produced invoice data can be stored in conformity with a requirement different for each nation. Hereinafter, this invoice data processing system 1 is described in detail.

### [2. HARDWARE CONFIGURATION]

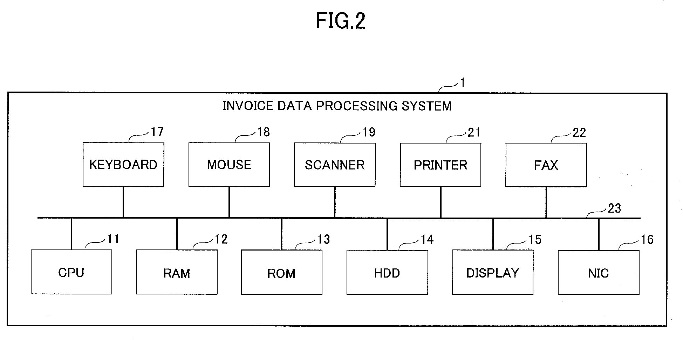

FIG. 2 illustrates a hardware configuration of the invoice data processing system 1 of the embodiment of the present invention. The invoice data processing apparatus 10 includes a CPU 11, a RAM 12, a ROM 13, a HDD 14, a display 15, a network interface card (NIC) 16, a keyboard 17, a mouse 18, a scanner 19, a printer 21, and a facsimile machine (FAX) 22.

The CPU 11 executes a program for controlling an operation of the invoice data processing apparatus 10. The RAM 12 provides a work area for the CPU 11. The ROM 13 stores a program executed by the CPU 11 and data necessary for executing the program. The HDD 14 is a memory device storing the invoice data, policy information, or the like. The HDD 14 may be a memory device such as a magnetic disk or a solid state disk.

The display 15 is provided to present information of an operation screen or the like to an administrator or the like of the invoice data processing apparatus 10. The NIC 16 is a communication device for connecting to the network. Instead of the NIC 16, a wireless communication device may be provided to connect the invoice data processing apparatus 10 to a wireless network. The keyboard 17 and the mouse 18 are an input device used for an administrator or the like of the invoice data processing apparatus 10 of directly operating the invoice data processing apparatus 10.

The scanner 19 is provided to read characters and images formed on a paper surface and converts these to electronic data. The printer 21 is provided to print the invoice data onto the paper surface. The facsimile machine (FAX) 22 is provided to send or receive facsimile (FAX) data through a telephone circuit. The bus 23 mutually connects the above devices.

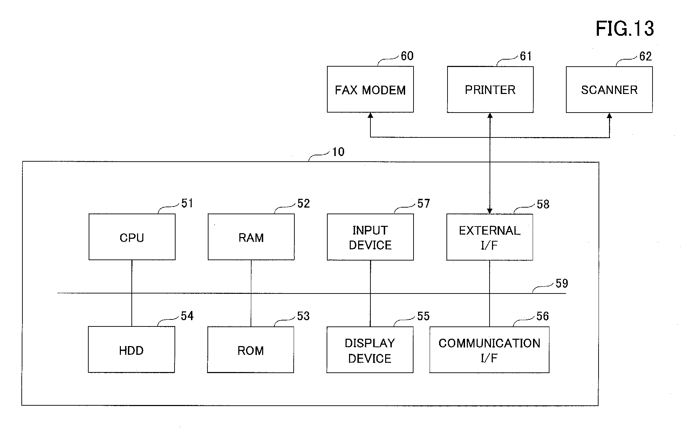

Further, in a case where the invoice data processing apparatus 10 is formed by a single computer, a hardware configuration is as illustrated in FIG. 13. Referring to FIG. 13, the invoice data processing apparatus 10 includes a CPU 51, a RAM 52, a ROM 53, a HDD 54, a display device 55, a communication I/F 56, an input device 57, an external I/F 58, and a bus 59 connecting the above devices. The invoice data processing apparatus 10 is connected to a facsimile (FAX) modem 60, a printer 61, and a scanner 62 through an external I/F 58. The printer 61 and the scanner 62 may be provided to be accessed through a network by the communication I/F 56.

Referring to FIG. 2, although the invoice data processing apparatus 10 is formed by the single computer, the invoice data processing apparatus 10 may be formed by bridging a plurality of computers as described above. Each of the plurality of computers includes a part of the device illustrated in FIG. 2 to substantialize the device illustrated in FIG. 2.

### [3. FUNCTIONS]

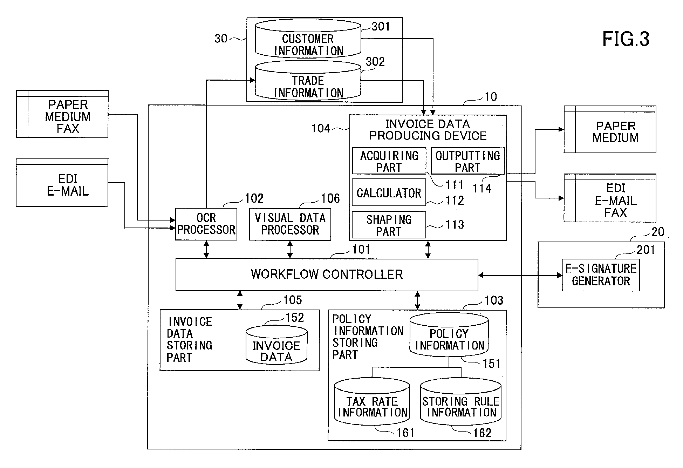

FIG. 3 is a functional block diagram of the invoice data processing system 1 of the embodiment of the present invention. Referring to FIG. 3, the invoice data processing apparatus 10 includes a workflow controller 101, an OCR processor 102, a policy information storing part 103, an invoice data producing device 104, and an invoice data storing part 105.

The workflow controller 101 is mainly substantialized by a process performed by the CPU 11 and controls various parts of the invoice data processing apparatus 10 so that the invoice data processing apparatus 10 is operated along with a defined workflow.

The workflow controller 101 causes the OCR processor 102 to take a document indicating the contents of the trade between the supplier and the customer of the supplier such as a paper, FAX data, electronica data (e.g., an electronic data interchange (EDI) or an e-mail). The workflow controller 101 stores the contents of the trade as the trade information into the backbone system 30 of the supplier.

Next, the workflow controller 101 causes the invoice data producing device 104 to produce a paper, FAX data, or invoice data based on customer information 301 and trade information 302, which are stored in the backbone system 30. At this time, policy information applied to each trade amount is read from the policy information storing part 103.

Further, the workflow controller 101 causes the invoice data storing part 105 to store the invoice data produced by the invoice data producing device 104 in conformity with the policy information stored in the policy information storing part 103. At this time, when necessary, the workflow controller 101 requests the e-signature generator 201 to add an e-signature to the invoice data.

Further, the workflow controller 101 causes the visual data processor 106 to output progress of producing the invoice data and detailed information of the invoice data, which are stored, in response to a request from a terminal or the like of the supplier. This output is displayed on the terminal of the supplier through, for example, an interface through a Web browser. A display screen used to display this output may be called a "dashboard".

The OCR processor 102 is mainly substantialized by functions of the CPU 11, the NIC 16, the scanner 19 and the facsimile machine (FAX) 20 and takes a document indicating the contents of the trade with the customer supplied from the supplier. The OCR processor 102 provides an optical character reader (OCR) process to the documents provided by the paper or the facsimile (FAX) to take the contents of the trade in the OCR processor 102. Here, the type of the document needs to be previously known. Further, the OCR processor 102 takes the contents of the trade from the document in the electronic type such as the EDI or the e-mail in conformity with a predetermined rule.

Further, the OCR processor 102 sends the read contents of the trade to the backbone system 30 of the supplier through the network. The contents of the trade are stored in the backbone system 30 as the trade information 302. The OCR processor 102 can send the contents of the trade to the backbone system 30 using an arbitrary type or a protocol.

The trade information 302 may be stored by a table illustrated in, for example, FIG. 5. FIG. 5 illustrates exemplary trade information of a trade between the supplier A and the customer B. The trade information 302 includes an item name, a unit price thereof, a quantity of commodities or services for the trade, and a class of the item. The class of the item is defined based on a difference of tax rate imposed by, for example, the VAT. For example, an identical tax rate is applied to items whose class is "class 1". The tax rates imposed for each class are determined by policy information 151 described below.

Further, the backbone system 30 previously stores customer information 301 including information of the customers. FIG. 4 illustrates exemplary customer information of a customer of the supplier A. The customer information 301 includes customer names which are names of customers, mediums to which the invoice data are output, currencies used for trades with the customers, nations where the customers belong, and types used for outputting the invoice data.

The policy information storing part 103 stores the policy information 151 applied when the invoice data are produced or stored. The policy information 151 further includes tax rate information 161 and storing rule information 162.

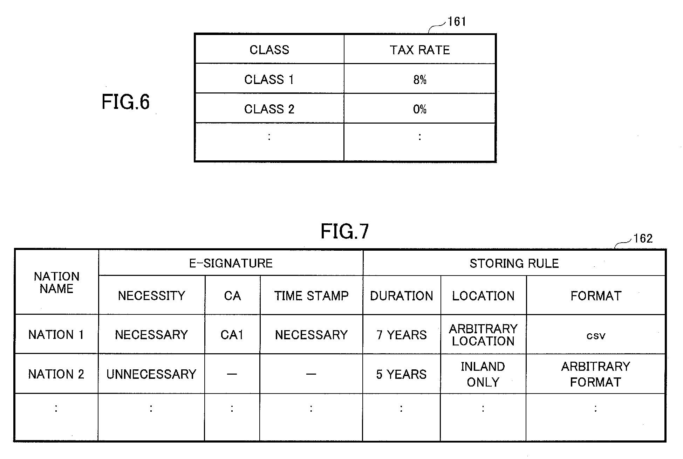

The tax rate information 161 includes contents illustrated in, for example, FIG. 6. FIG. 6 illustrates an exemplary table which stores a tax rate for each class of the items and is applied to a trade between the supplier A and the customer B. The tax rate information 161 includes classes for the items and the tax rates uniformly applied to the items of the class. The contents of the class of the tax information 161 correspond to the contents of the class of the trade information 302. The tax rate information 161 may be prepared for each nation or each region.

The storing rule information 162 includes contents illustrated in, for example, FIG. 7. FIG. 7 is an exemplary table storing a storing rule for the invoice data, which is determined for each nation or each region. The storing rule information 162 includes contents of a nation name, an e-signature, and a storing rule.

The contents of the e-signature are "necessity" indicative of whether it is required to add the e-signature, "CA" indicative of an issuer of an electronic certificate (CA) when the e-signature is required, and "time stamp" indicative of whether it is necessary to add the time stamp to the e-signature.

The contents of the storing rule are "duration" indicative of a storage term of the invoice data, "location" indicative of a limitation to a place where the invoice data are stored, and "format" indicative of a format to which the output invoice data are converted.

The above e-signature and the storing rule are only examples. Practically, another rule may be additionally imposed based on a legal system related to a trade in a nation or a region. In this case, the contents included in the storing rule information 162 are appropriately expanded.

The invoice data producing device 104 is mainly substantialized by functions of the CPU 11, the NIC 16, the printer 21, the facsimile machine (FAX) 22, or the like. The invoice data producing device 104 includes an acquiring part 111, a calculator 112, a shaping part 113, and an outputting part 114.

The acquiring part 111 reads the customer information 301 and the trade information 302 that are stored in the backbone system 30. At this time, the acquiring part 111 can read the customer information 301 and the trade information 302 in an arbitrary protocol or an arbitrary type.

The calculator 112 calculates an amount billed (i.e., the sum of trade amounts) by applying the tax rate information 161 stored in the policy information storing part 103 to each trade amount contained in the trade information 302 read by the acquiring part 111. For example, the calculator 112 receives the trade information 302 illustrated in FIG. 5 for the customer B whose currency is Euro as illustrated in FIG. 4, and applies the tax information 161 illustrated in FIG. 6 to thereby calculate the amount billed. In this example, a tax rate of 8% is imposed on "item 1" whose "class" is "class 1", and a tax rate of 0% is imposed on "item 2" whose "class" is "class 2". Therefore, the amount billed is 208 Euros under the conditions illustrated in FIGs. 4 to 6.

The shaping part 113 shapes the invoice data by using the customer information 301 and the trade information 302, which are read by the acquiring part 112, and the information of the amount billed calculated by the calculator 112. The shaping part 113 shapes the invoice data using, for example, an arbitrary application. For example, the shaping part 113 shapes the invoice data by inserting necessary information into a template prepared by using Word ("Word" is a registered trademark of Microsoft Corporation), Excel ("Excel" is a registered trademark of Microsoft Corporation), or the like. The shaped invoice data is output in an appropriate type by the outputting part 114 described below.

Therefore, the shaping part 113 reads "type" of the customer information 301 and describes information of the item name, the unit price, the amount billed, or the like in conformity with the "type". The above template is prepared corresponding to the type.

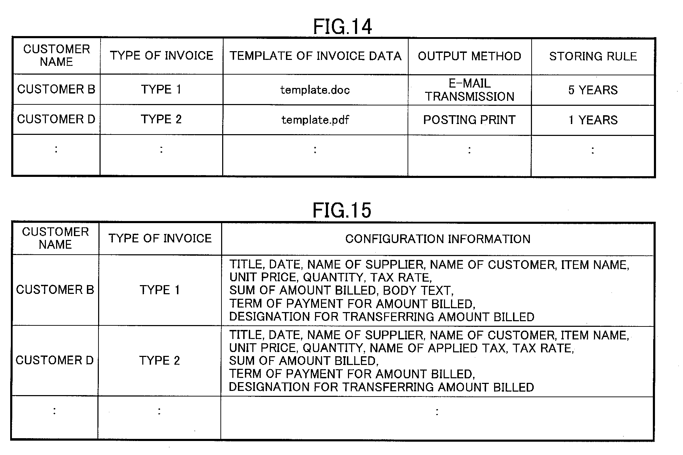

In a case where the type of the invoice data to be output for each customer is previously determined, the shaping part 113 can determine the type of invoice corresponding to the customer by using, for example, a table (see FIG. 14) previously prepared by the administrator. The table illustrated in FIG. 14 stores a customer name, a type of invoice, a template of the invoice data, an output method, and a storing rule by associating these. The content of "template of invoice data" indicates the file name of a file which is a template of the output invoice data, and the content of "output method" indicates a method of sending the output invoice data. Further, the content of "storing rule" indicates a storing time limit for the invoice data.

Further, the shaping part 113 may determine configuration information of the type of invoice for each customer using the table (see FIG. 15). The table illustrated in FIG. 15 can store the customer name, the type of invoice, and the configuration information by associating these. Among these, the configuration information indicates contents of the output invoice data. The shaping part 113 uses a table illustrated in FIG. 15 and can determine the type and the configuration of the invoice data output for each customer using the table illustrated in FIG. 15.

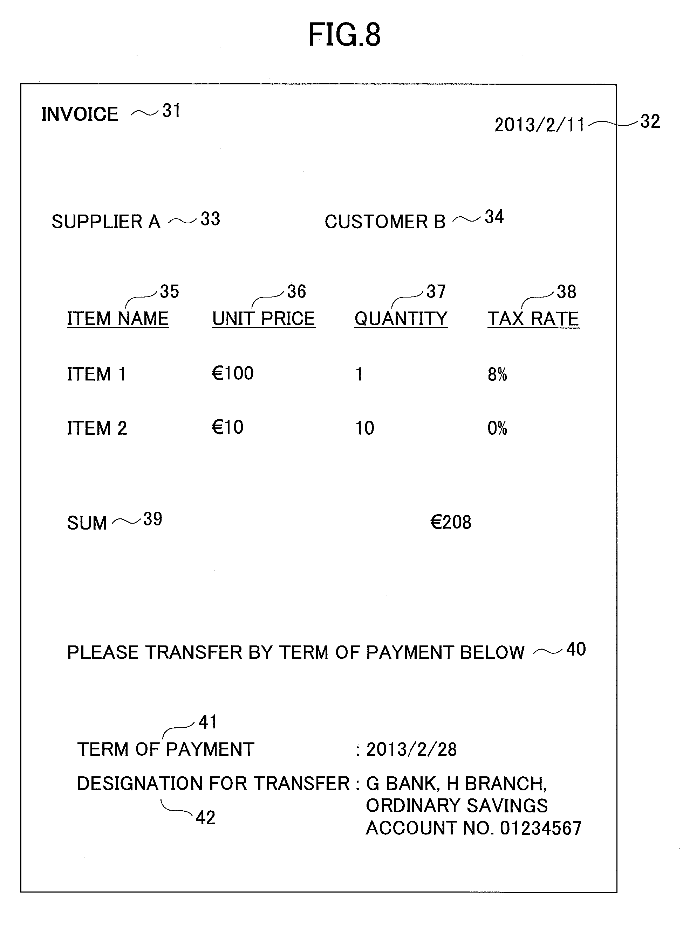

In the following description, the invoice data having the type exemplified in FIG. 8 are output. The type exemplified in FIG. 8 corresponds to "type 1" selected for the customer B illustrated in FIG. 4.

The "type 1" illustrated in FIG. 8 includes information of, for example, a title 31, a date 32, the name 33 of the supplier A, the name 34 of the customer B, an item name 35, a unit price 36, a quantity 37, a tax rate 38, a sum 39 of amounts billed, a body text 40, a term 41 of payment for the sum of the amounts billed, and a designation 42 for transferring the sum of the amounts billed. The item name 35, the unit price 36, and the quantity 37 are information contained in the trade information 302 illustrated in, for example, FIG. 5. The tax rate 38 is information contained in, for example, FIG. 6. The sum 39 of the amounts billed is calculated by the calculator 112. The body text 40, the term 41 of payment, and the designation 42 for transfer are information previously prepared for each supplier or each type, and are appropriately stored by a memory unit (not illustrated). Meanwhile, the title 31 may instead be a logo of the supplier A.

The outputting part 114 outputs the invoice data shaped by the shaping part 113 to a medium determined corresponding to the customer. The outputting part 114 refers to the content of "medium" of the customer information read by the acquiring part 111 and determines the medium to which the invoice data are output. For example, the invoice data shaped as illustrated in FIG. 8 are output in a type of PDF to "customer B" illustrated in FIG. 4. Further, in a case where the content of "medium" in the customer information 301 is "facsimile (FAX)", the outputting part 114 converts the shaped invoice data to a type which can be sent by a facsimile (FAX) transmission.

Further, the outputting part 114 can print the invoice data on the paper medium or output the invoice data by EDI (e.g., a conversion to extensible markup language (XML)) or by an e-mail (e.g., a production of an e-mail attached with a file of the invoice data or a conversion to an HTML mail). The conversion of the invoice data to XML or the HTML mail may be performed by the shaping part 113.

Further, the outputting part 114 may perform a process of sending the invoice data output to an arbitrary medium to the customer. For example, in a case where the output type of the invoice data is PDF, EDI, or an e-mail, the invoice data may be sent to a terminal of the customer through the network. In a case where the output type of the invoice data is facsimile (FAX), the invoice data may be sent to the customer by facsimile (FAX).

The invoice data storing part 105 is mainly substantialized by functions of the CPU 11 and the HDD 14 and stores the invoice data which are produced by the invoice data producing device 104 in conformity with the storing rule information 162 stored in the policy information storing part 103.

At first, the invoice data storing part 105 reads the storing rule applied to the trade between the supplier A and the customer B from the storing rule information 162 illustrated in FIG. 7. Here, the content corresponding to "nation 1" are read.

In the "nation 1", it is required to add a e-signature to the invoice data to be stored. Further, it is required that the electronic certificate for the e-signature be issued by "CA1" and that the e-signature be added with the time stamp. Therefore, the invoice data storing part 105 requests the e-signature generator 201 of the e-signature system 20 to add the e-signature having the time stamp (by using a certificate issued by CA1) to the invoice data through the workflow controller 101.

Next, the invoice data storing part 105 stores the data added with the received e-signature in conformity with the policy information determined in "storing rule" of the storing rule information 162. For example, the invoice data need to be stored at an arbitrary place for 7 years in "nation 1" so as to be able to output in a type of comma separated values (csv). In this case, the invoice data storing part 105 stores the invoice data added with the e-signature in the type convertible to csv at an arbitrary location.

On the other hand, in a case where the storing rule of the storing rule information 162 requires that the invoice data be stored inside a specific nation, the invoice data storing part 105 stores the invoice data in the HDD 14 which is installed in the specific nation and included in the invoice data processing apparatus 10. As described, because the invoice data processing apparatus 10 can be dispersively located at a plurality of locations, it is possible to deal with the above requirement.

As described, the invoice data processing system 1 of the embodiment can calculate the amount billed depending on the tax rate determined for each item and produce the invoice data to the customer in the arbitrary type. Further, the invoice data processing apparatus 10 can store the invoice data in conformity with the legal system applied to the trade between the supplier and the customer. With this, the invoice data processing system 1 can thoroughly perform an invoice issuing operation and an invoice storing operation of the supplier. Therefore, efficiency of operations of the supplier is promoted and it is possible to contribute to adherence to legal systems in an international trade.

### [4. EXEMPLARY OPERATIONS]

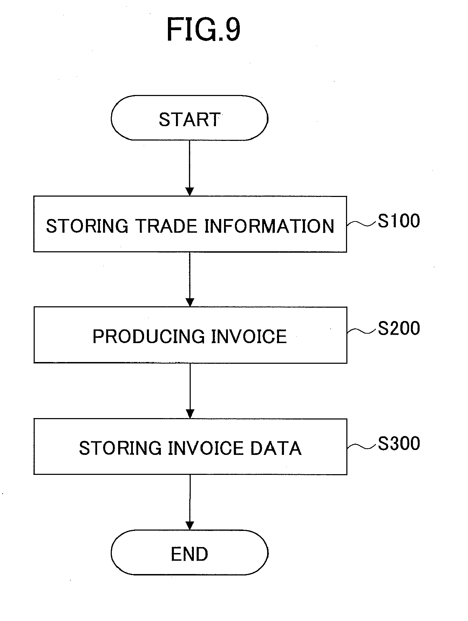

Hereinafter, referring to FIGs. 9 to 12, exemplary operations of the invoice data processing system 1 of the embodiment are described.

FIG. 9 is a flow chart schematically illustrating a process performed by the invoice data processing apparatus 10 of the embodiment of the present invention. The invoice data processing apparatus 10 stores information of the trade between the supplier and the customer as the trade information 302 in the backbone system 30 of the supplier in step S100. Next, the invoice data processing apparatus 10 reads the customer information 301 and the trade information 302, which are stored in the backbone system 30 of the supplier, and produces the invoice data in conformity with the policy information applied to the trade in step S200. Then, the invoice data processing apparatus 10 stores the invoice data at a predetermined location in conformity with the policy information of the storing rule, which is applied to the produced invoice data, in step S300.

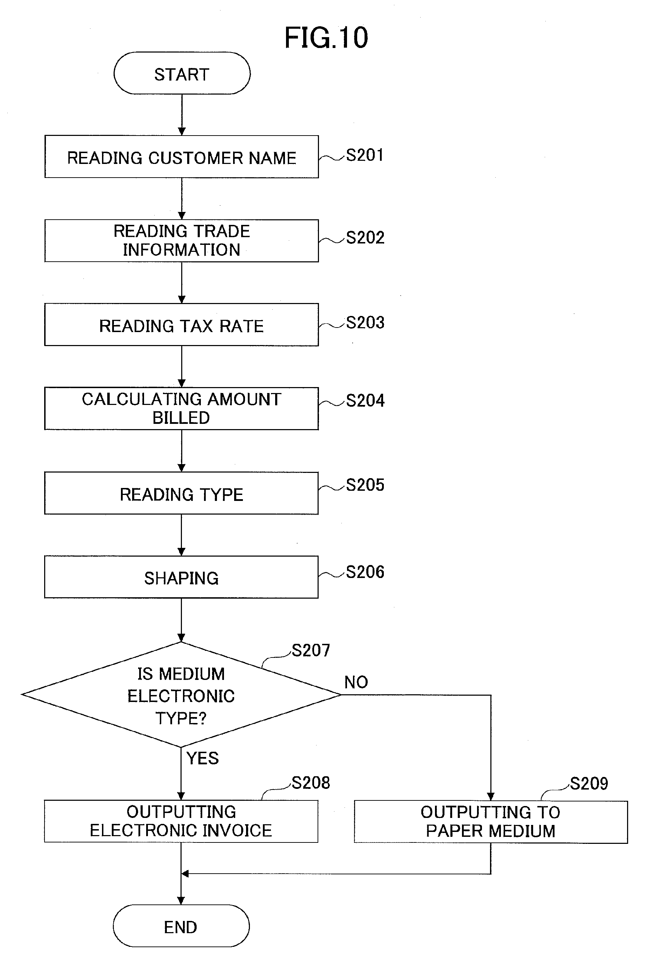

FIG. 10 is a flow chart illustrating a process of producing the invoice data performed by the invoice data processing apparatus 10 of the embodiment of the present invention. The flow chart illustrated in FIG. 10 indicates a flow of the specific process of step S200. The process of producing the invoice is started by receiving a request of producing the invoice data from, for example, a terminal or the like of the supplier A.

In step S201, the acquiring part 111 of the invoice data processing apparatus 10 reads the customer name from the customer information 301 stored in the backbone system 30 of the supplier A.

In step S202, the acquiring part 111 of the invoice data processing apparatus 10 reads a part of the trade information corresponding to the customer name, which is read in step S201, from the trade information 302 stored in the backbone system 30 of the supplier A.

In step S203, the calculator 112 of the invoice data processing apparatus 10 reads the tax rate information 161 stored in the policy information storing part 103.

In step S204, the calculator 112 of the invoice data processing apparatus 10 calculates the amount billed by applying the tax rate information for each class of the trade item.

In step S205, the shaping part 113 of the invoice data processing apparatus 10 reads the type of the invoice data corresponding to the customer name read in step S201 from the customer information 301. At this time, the shaping part 113 may read the table illustrated in FIG. 14 and determine the template of the invoice data. Further, the shaping part 113 may read a table illustrated in FIG. 15 and determines configuration information of the type corresponding to the customer name.

In step S206, the shaping part 113 of the invoice data processing apparatus 10 shapes the invoice data to be output for each customer depending on the types read in step S205. Specifically, the shaping part 113 reads the template determined in step S205 and can insert the customer name, the trade information (the item name, the unit price, and the quantity), the tax rate information (the tax rate), the amount billed calculated in step S204, or the like to predetermined positions on the read template.

In step S207, the medium of the customer information 301 belongs to an electronic type such as "PDF", "EDI", or "e-mail", the process goes to step S208 to cause the outputting part 114 of the invoice data processing apparatus 114 to output the invoice data in the electronic type. Further, in a case where the medium is "facsimile (FAX)", the invoice data are processed in the electronic type.

Meanwhile, in a case where the medium of the customer information is not the electronic type but a paper in step S207, the process goes to step S209 and the outputting part 114 of the invoice data processing apparatus 10 outputs the invoice data on the paper as the medium.

The steps S201 to S203 are an example of reading the customer information 301 and the trade information 302. Practically, these information can be configured to be simultaneously read. As described, since the acquiring part 111 simultaneously read the necessary information, it becomes unnecessary to read the type in step S205.

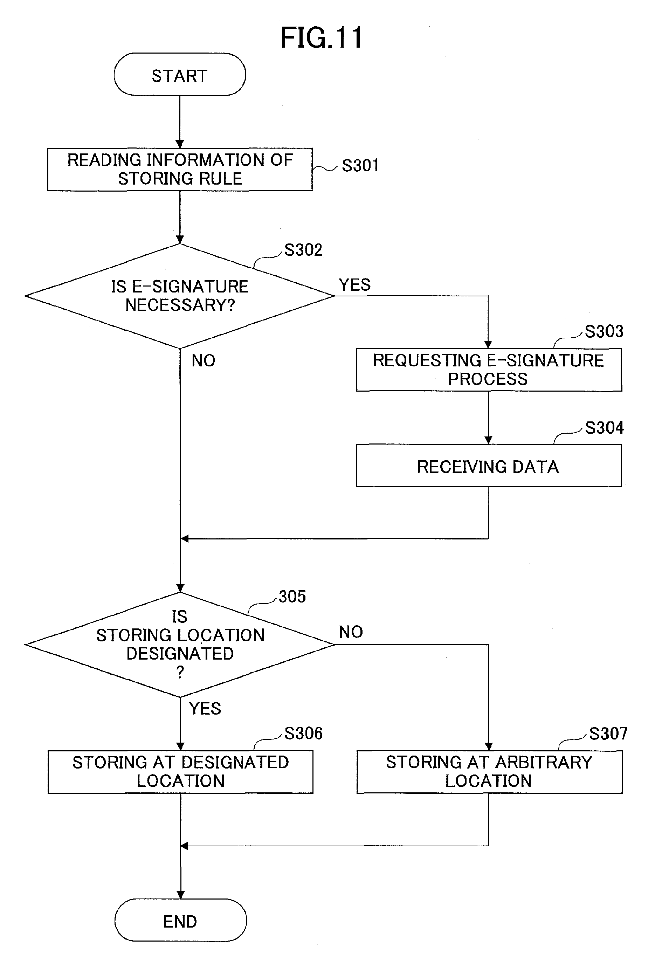

FIG. 11 is a flow chart illustrating a process of storing the invoice data performed by the invoice data processing apparatus 10 of the embodiment of the present invention. The process of storing the invoice data is performed at, for example, a time point when the invoice data of the supplier A are completely finished during a predetermined time period.

In step S301, the invoice data storing part 105 of the invoice data processing apparatus 10 reads the storing rule information 162 stored in the policy information storing part 103.

In step S302, in a case where the e-signature for the storing rule information 162 is "necessary" in step S302, the process goes to step S303. Otherwise, the process goes to step S305.

In step S303, the invoice data storing part 105 of the invoice data processing apparatus 10 requests the e-signature generator 201 of the e-signature system 20 to add the e-signature to the invoice data through the workflow controller 101.

In step S304, the invoice data storing part 105 of the invoice data processing apparatus 10 receives the invoice data added with the e-signature through the workflow controller 101.

In step S305, in a case where the location of the storing rule of the storing rule information 162 is designated (for example, inland only), the process goes to step S306. Otherwise, the process goes to step S307.

In step S306, the invoice data storing part 105 of the invoice data processing apparatus 10 stores the invoice date of a type where a predetermined format can be output in a memory device located at a predetermined location.

In step S307, the invoice data storing part 105 of the invoice data processing apparatus 10 stores the invoice date of the type where the predetermined format can be output in a memory device located at an arbitrary location. Here, the invoice data storing part 105 of the invoice data processing apparatus 10 may store the invoice date in the memory device having a greater free space out of the memory devices provided at a plurality of locations.

As such, the invoice data stored in the invoice data storing part 105 of the invoice data processing apparatus 10 are stored for a period determined in the storing rule. After the above period passes, the invoice data may be deleted in conformity with a request of the supplier or the like or continuously stored.

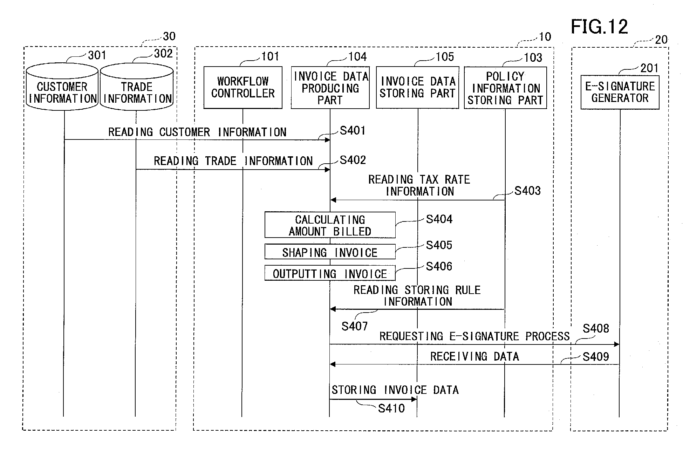

FIG. 12 is a sequence chart illustrating operations of the invoice data processing system 1 of the embodiment of the present invention. Information of the trade between the supplier A and the customer of the supplier A is already stored in the backbone system 30 of the supplier A. In the following example, the invoice data processing system 1 processes the invoice data of the supplier A sent to the customer B.

In step S401, the invoice data producing device 104 (the acquiring part 111) of the invoice data processing apparatus 10 reads the customer information 301 (see FIG. 4) stored in the backbone system 30 of the supplier A and determines the medium, the currency, the nation name, and the type which relates to the output of the invoice data of the customer B.

In step S402, the invoice data producing device 104 (the acquiring part 111) reads the trade information 302 (see FIG. 5) for the customer B that is stored in the backbone system 30 of the supplier A and determines the item name, the unit price, the quantity, and the class which relates to the trade.

In step S403, the invoice data producing device 104 (the calculator 112) of the invoice data processing apparatus 10 reads the tax rate information 161 (see FIG. 6) which is stored in the policy information storing part 103 and determines the tax rate for each class of the item names for the trade.

In step S404, the invoice data producing device 104 (the calculator 112) of the invoice data processing apparatus 10 calculates the amount billed by using the trade information 302 and the tax rate information 161. Specifically, the invoice data producing device 104 multiplies the unit price by the quantity for each item name and applies the tax rate corresponding to the class to thereby calculate the amount billed for each item name. Then, the amounts billed of all the item names are summed up to obtain the sum of the amounts billed.

In step S405, the invoice data producing device 104 (the shaping part 113) of the invoice data processing apparatus 10 shapes the invoice data in conformity with the type indicated by the customer information 301. Here, the invoice data producing device 104 may refer to the table exemplified in FIGs. 14 and 15 to read the template of invoice data indicative of the type of the invoice data and the configuration information related to the contents forming the invoice data. Specifically, the invoice data producing device 104 reads the template of the invoice data and inserts the customer name, the trade information (the item name, the unit price, and the quantity), the tax rate information (the tax rate), the sum of the amounts billed calculated in step S404, or the like to predetermined positions. The invoice data shaped in this step are temporarily stored in a type (doc) of a Word file ("Word" is a registered trademark of Microsoft Corporation).

In step S406, the invoice data producing device 104 of the invoice data processing apparatus 10 outputs the invoice data to the medium indicated in the customer information 301 (see FIG. 4). Here, the medium corresponding to the customer B is a type of "PDF". Therefore, the invoice data producing device 104 outputs the invoice data shaped in step S405 to have the type of "PDF".

In step S407, the invoice data storing part 105 of the invoice data processing apparatus 10 reads the storing rule information 162 (see FIG. 7) stored in the policy information storing part 103. Here, the nation name corresponding to the customer B in the customer information 301 illustrated in FIG. 4 is "nation 1". Therefore, the invoice data storing part 105 recognizes that the e-signature having the time stamp generated by the certificate authority "CA1" is necessary when the invoice data are stored. Further, the invoice data storing part 105 recognizes that the produced invoice data need to be stored for "7 years" at the arbitrary location in the type of "csv".

In step S408, the invoice data storing part 105 requests the e-signature generator 201 of the e-signature system 20 to add the e-signature having the time stamp issued by "CA1" to the produced invoice data through the workflow controller 101.

In step S409, the invoice data storing part 105 of the invoice data processing apparatus 10 receives the invoice data added with the e-signature through the workflow controller 101.

In step S410, the invoice data storing part 105 of the invoice data processing apparatus 10 stores the invoice data in conformity with the storing rule. As illustrated in FIG. 7, the invoice data of the customer B of "nation 1" can be stored in the type of "csv" at the arbitrary location. Therefore, the invoice data storing part 105 stores elements forming the produced invoice data (the name of the supplier, the name of the customer, the item name, the unit price, the quantity, the tax rate, the sum of the amounts billed, or the like) in the type of "csv" at the arbitrary memory device.

In the process of step S410, the invoice data processing apparatus may calculates the amount billed of the invoice data stored in the invoice data storing part 105. For example, an amount may be calculated for a predetermined period (every month, every half year, or the like) or a predetermined amount (the number of sheets of the invoices) based on an amount previously determined with users in causing a system of the embodiment to be utilized.

Further, the customer B or D may personally access the amount calculated by the invoice data processing system 1.

Within the information processing system of the embodiment of the present invention, the invoice data can be processed in conformity with rules different for each nation.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although an information processing system has been described in detail, it should be understood that various changes, substitutions, and alterations could be made thereto without departing from the spirit and scope of the invention.

## Claims

1. An information processing system that performs data processing based on trade information, the information processing system comprising:
a trade information acquiring device which acquires the trade information;
a rule information storing device which stores first rule information applied to trade amounts contained in the trade information and second rule information applied to invoice data that are produced based on the first rule information; and
a workflow controller which controls the invoice data that are produced based on the first rule information so that the invoice data are stored based on the second information.

2. The information processing system according to claim 1,
wherein the first rule information determines a tax rate applied to each of the trade amounts.

3. The information processing system according to claim 1 or 2, further comprising:
an invoice data producing device which produces the invoice data from the trade information based on the first rule information.

4. The information processing system according to claim 3, further comprising:
a calculator which calculates a sum of the trade amounts,
wherein the invoice data producing device produces the invoice data by applying the first rule information to the sum of the trade amounts calculated by the calculator.

5. The information processing system according to claim 4, further comprising:
a customer information storing device which stores customer information associating each customer with a first information piece contained in the first information as being applied and a second information piece contained in second information as being applied; and
a customer information acquiring device which acquires the customer information.

6. The information processing system according to claim 5,
wherein the invoice data producing device produces the invoice data from the trade information using a predetermined first information piece associated with the customer.

7. The information processing system according to any one of claims 1 to 6,
wherein the second rule information determines a storing time limit and a storing location for the invoice data.

8. The information processing system according to claim 7,
wherein the workflow controller controls a predetermined memory device so that the predetermined memory device stores the invoice data base on the storing time limit and the storing location of the invoice data.

9. The information processing system according to any one of claims 1 to 8, further comprising:
a trade information storing device which stores the trade information input in a form of paper, facsimile data, or electronic data.

10. The information processing system according to claim 6,
wherein the second rule information further determines whether it is required to add an e-signature to the invoice data.

11. An information processing apparatus that performs data processing based on trade information, the information processing apparatus comprising:
the trade information acquiring device, the rule information storing device, and the workflow controller of the information processing system according to claim 1.

12. A method of controlling an information processing apparatus that performs data processing based on trade information, the method comprising:
acquiring the trade information; and
controlling invoice data that are produced based on first rule information applied to trade amounts contained in the trade information so that the invoice data are stored based on second information applied to invoice data.

13. A computer program comprising code means that causes a target computer as an information processing apparatus that performs data processing based on trade information to perform a procedure, the procedure comprising:
acquiring the trade information; and
controlling invoice data that are produced based on first rule information applied to trade amounts contained in the trade information so that the invoice data are stored based on second information applied to invoice data.
